# EUROPEAN PATENT APPLICATION

(11) **EP 3 284 995 A1**
(43) Date of publication of application: **21.02.2018**
(21) Application number: 16779733.1
(22) Date of filing: 16.03.2016
(51) Int. Cl.: F16L 59/065, B65D 81/38, F25D 23/06

(54) **VACUUM HEAT INSULATOR, AND HEAT-INSULATING CONTAINER AND HEAT-INSULATING WALL USING SAME**

(30) Priority: 13.04.2015 JP 2015081387
(71) Applicant: Panasonic Intellectual Property Management Co., Ltd., Osaka-shi, Osaka 540-6207 (JP)
(72) Inventor: HIRANO, Toshiaki, Osaka-shi, Osaka 540-6207 (JP); KAWARAZAKI, Hideji, Osaka-shi, Osaka 540-6207 (JP); HIRAI, Tsuyoki, Osaka-shi, Osaka 540-6207 (JP); KITANO, Tomoaki, Osaka-shi, Osaka 540-6207 (JP); OKADA, Hiroyuki, Osaka-shi, Osaka 540-6207 (JP); MIYAHIGASHI, Masayuki, Osaka-shi, Osaka 540-6207 (JP)
(74) Representative: Eisenführ Speiser
(86) International application number: PCT/JP2016/001503
(87) International publication number: WO 2016/166934

(57) **Abstract**

A vacuum heat insulator includes a heat insulating material formed of open-cell urethane foam that is vacuum-sealed by an enveloping member, and the heat insulating material includes a plurality of holes each of which has a diameter ranging from 0.1 mm to 6.0 mm (both inclusive) formed in a uniform direction.

## Description

### TECHNICAL FIELD

The present invention relates to a vacuum heat insulator, and a heat-insulating container and a heat-insulating wall using the vacuum heat insulator.

### BACKGROUND ART

In recent years, energy savings have been strongly desired to prevent the global warming, and such energy savings are an urgent issue also in electric household appliances. In particular, hot and/or cold keeping equipment such as refrigerators, freezers, and vending machines requires a heat insulating material having an excellent heat insulation performance in view of efficient utilization of heat.

Fiber materials, such as glass wool, and foamed objects, such as urethane foam are generally used as heat insulating materials. To enhance the heat insulation performance of the heat insulating materials, it is necessary to increase the thicknesses of the heat insulating materials, however, in cases where a space to be filled with such a heat insulating material is limited, or space savings and effective utilization of the space are required, or the like, a thick heat insulating material cannot be used.

In view of the above, a vacuum heat insulating material is proposed as a heat insulating material with high performance. The vacuum heat insulating material is a heat insulator obtained by inserting a core material serving as a spacer into an enveloping member with gas barrier properties and sealing the enveloping member after reducing the pressure inside.

The heat insulation performance of the vacuum heat insulating material is approximately 20 times higher than that of the urethane foam, and the vacuum heat insulating material has excellent characteristics that can exhibit good performance in heat insulation even when the vacuum heat insulating material is made thin.

Accordingly, the vacuum heat insulating material is attracting attention as an effective measure to save energy due to enhancement of the performance in heat insulation, while satisfying customers' needs to increase an inner volume of a heat insulation box.

The vacuum heat insulating material is additionally provided in a heat insulating space between an inner box and an outer box that includes urethane foam to improve the heat insulating performance of a refrigerator and the like and enlarge an internal volume of the heat insulation box forming a main body of a refrigerator.

However, when a vacuum heat insulating material is used in a refrigerator or the like, a covering area of the vacuum heat insulating material, in other words, a proportion of an area of the vacuum heat insulating material in a total heat transmission area of the heat insulation box is limited, since a heat insulating space of a heat insulation box generally has a complex shape.

For example, a technique has been proposed which uses a heat insulation box itself as a vacuum heat insulating material such that, after open-cell urethane foam fills the heat insulating space of the heat insulation box through an air inlet for blow molding of the heat insulation box, the heat insulation box is evacuated by an evacuation device connected to the air inlet (See PTL 1, for example).

On the other hand, in manufacturing steps of a vacuum heat insulating material, the low exhaust efficiency of a filling material causes a considerable reduction of productivity, since such a filling material with low exhaust efficiency requires a great amount of time to evacuate air and moisture from the vacuum heat insulating material. In a case where waste paper is used as a filling material of the vacuum heat insulating material, a technique has been proposed in which penetrating-cuttings and/or through holes are provided to significantly improve the exhaust efficiency (see PTL 3, for example).

In addition, a technique has been proposed which uses a heat insulation box itself as a vacuum heat insulating material as in PTL 1 such that a heat insulating space of a heat insulation box, which is to configure a main body of a refrigerator, is filled with open-cell urethane foam and evacuated. Further, a technique has been proposed which increases an open-cell ratio to further improve exhaust efficiency and heat insulation performance by allowing closed cells remained in a skin layer, which is generated near an inner surface of the box when filling the heat insulating space with open-cell urethane foam, to communicate with one another (see PTL 2, for example).

As described above, a vacuum heat insulator disclosed in PTL 2 configured by evacuating and sealing open-cell urethane foam can entirely evacuate and insulate the vacuum heat insulator, even when the vacuum heat insulator has a complex outer shape like a heat insulation box. Accordingly, when such a vacuum heat insulator is used in a refrigerator or the like, the heat insulation box itself can be made thin to further increase an internal volume of the box (storage space).

However, the open cells in the vacuum heat insulator configured by evacuating and sealing open-cell urethane foam are very small, specifically ranging from 2 µm to 30 µm (both inclusive) in pore diameters, and thus it takes time to evacuate the vacuum heat insulator to cause a reduction in productivity and also cause an increase in cost.

### Citation List

### Patent Literature

PTL 1: JP H09-119771 A
PTL 2: JP 5310928 B1
PTL 3: JP S62-156793 U

### SUMMARY OF THE INVENTION

The present invention has been made in view of the above problems, and provides a vacuum heat insulator that improves evacuation efficiency and increases productivity.

Specifically, a vacuum heat insulator according to an example of an exemplary embodiment of the present invention includes a heat insulating material formed of open-cell urethane foam that is evacuated and sealed by an enveloping member, and also includes an exhaust port for evacuation. The heat insulating material includes a plurality of vent holes on at least one surface of the heat insulating material in a uniform direction, and each of the vent holes has a diameter ranging from 0.1 mm to 6.0 mm (both inclusive).

With this configuration, air in the vacuum heat insulator is exhausted through the vent holes provided in the heat insulating material from the heat insulating material of a high ventilation resistance that fills an interior of the vacuum heat insulator when evacuating the interior of the vacuum heat insulator. This shortens exhaust passages from the cells (pores) included in the heat insulating material to the exhaust port to enable efficient exhaustion, which reduces evacuation time and improves productivity. In addition, the vent holes provided in the heat insulating material shorten the exhaust passages, which enables efficient exhaustion of gases gradually generated from an interior of the heat insulating material, such as open-cell urethane foam. This reduces an amount of such gases and also disperses such gases into the whole exhaust passages including the vent holes and the like provided in the heat insulating material. This configuration suppresses deformation of the vacuum heat insulator due to a local pressure increase. In addition, this configuration also suppresses degradation in the heat insulation performance, since the amount of gases generated from the heat insulating material of a high ventilation resistance is reduced.

### BRIEF DESCRIPTION OF DRAWINGS

FIG. 1 is an enlarged perspective view showing a part of a vacuum heat insulator according to an exemplary embodiment of the present invention.
FIG. 2A is a sectional view of the vacuum heat insulator according to the exemplary embodiment of the present invention taken along line A-A of FIG. 1, in which vent holes are omitted.
FIG. 2B is a sectional view of the vacuum heat insulator according to the exemplary embodiment of the present invention taken along line 2B-2B of FIG. 2A.
FIG. 3 is a flow chart of a process of manufacturing the vacuum heat insulator according to the exemplary embodiment of the present invention.
FIG. 4A is a schematic diagram illustrating a configuration example of
open-cell urethane foam of the vacuum heat insulator according to the exemplary embodiment of the present invention.
FIG. 4B is a microphotograph showing a condition between one or more pairs of opposing cells of the open-cell urethane foam of the vacuum heat insulator according to the exemplary embodiment of the present invention.
FIG. 4C illustrates a configuration of the cells shown in FIG. 4B of the open-cell urethane foam of the vacuum heat insulator according to the exemplary embodiment of the present invention.
FIG. 4D is a microphotograph of a cell film portion of the open-cell urethane foam of the vacuum heat insulator according to the exemplary embodiment of the present invention.
FIG. 4E illustrates a configuration of the cell film portion shown in FIG. 4D of the open-cell urethane foam of the vacuum heat insulator according to the exemplary embodiment of the present invention.
FIG. 4F is a microphotograph of a through hole formed by a fine powder at a cell skeleton portion between one or more pairs of opposing cells of the open-cell urethane foam of the vacuum heat insulator according to the exemplary embodiment of the present invention.
FIG. 4G illustrates a configuration of the cell skeleton portion shown in FIG. 4F of the open-cell urethane foam of the vacuum heat insulator according to the exemplary embodiment of the present invention.
FIG. 4H is a microphotograph showing a further detail of a condition of the cell skeleton portion of the open-cell urethane foam of the vacuum heat insulator according to the exemplary embodiment of the present invention.
FIG. 4I illustrates a configuration of the cell skeleton portion shown in FIG. 4H of the open-cell urethane foam according to the exemplary embodiment of the present invention.
FIG. 5A is a sectional view of the vacuum heat insulator according to the exemplary embodiment of the present invention taken along line A-A of FIG. 1, showing a condition in which vent holes are provided.
FIG. 5B is a sectional view of the vacuum heat insulator according to the exemplary embodiment of the present invention taken along line 5B-5B of FIG. 5A.
FIG. 6A is a sectional view of the vacuum heat insulator of another arrangement example 1 according to the exemplary embodiment of the present invention taken along line A-A of FIG. 1.
FIG. 6B is a sectional view of the vacuum heat insulator of the arrangement example 1 according to the exemplary embodiment of the present invention taken along line 6B-6B of FIG. 6A.
FIG. 7A is a sectional view of the vacuum heat insulator of another arrangement example 2 according to the exemplary embodiment of the present invention taken along line A-A of FIG. 1.
FIG. 7B is a sectional view of the vacuum heat insulator of the arrangement example 2 according to the exemplary embodiment of the present invention taken along line 7B-7B of FIG. 7A.
FIG. 8A is a sectional view of the vacuum heat insulator of another arrangement example 3 according to the exemplary embodiment of the present invention taken along line A-A of FIG. 1.
FIG. 8B is a sectional view of the vacuum heat insulator of the arrangement example 3 according to the exemplary embodiment of the present invention taken along line 8B-8B of FIG. 8A.
FIG. 9A is a sectional view of the vacuum heat insulator of another arrangement example 4 according to the exemplary embodiment of the present invention taken along line A-A of FIG. 1.
FIG. 9B is a sectional view of the vacuum heat insulator of the arrangement example 4 according to the exemplary embodiment of the present invention taken along line 9B-9B of FIG. 9A.
FIG. 10A is a sectional view of the vacuum heat insulator of another arrangement example 5 according to the exemplary embodiment of the present invention taken along line A-A of FIG. 1.
FIG. 10B is a sectional view of the vacuum heat insulator of the arrangement example 5 according to the exemplary embodiment of the present invention taken along line 10B-10B of FIG. 10A.
FIG. 11 shows a relationship between thermal conductivity and diameters of the vent holes of the vacuum heat insulator according to the exemplary embodiment of the present invention.
FIG. 12 shows a relationship between an equilibrium pressure of the vacuum heat insulator and an area ratio of the vent holes provided in the vacuum heat insulator according to the exemplary embodiment of the present invention.
FIG. 13 shows a relationship between the equilibrium pressure of the vacuum heat insulator and depths of the vent holes according to the exemplary embodiment of the present invention.
FIG. 14 shows a relationship between a compressive strength of the vacuum heat insulator and the area ratio of the vent holes provided in the vacuum heat insulator according to the exemplary embodiment of the present invention.

### DESCRIPTION OF EMBODIMENT

An example of an exemplary embodiment of the present invention is described below with reference to the drawings. Note that the exemplary embodiment should not be construed as a limitation on the present invention.

### EXEMPLARY EMBODIMENT

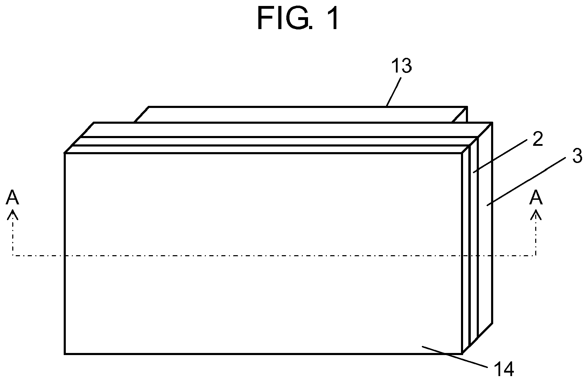

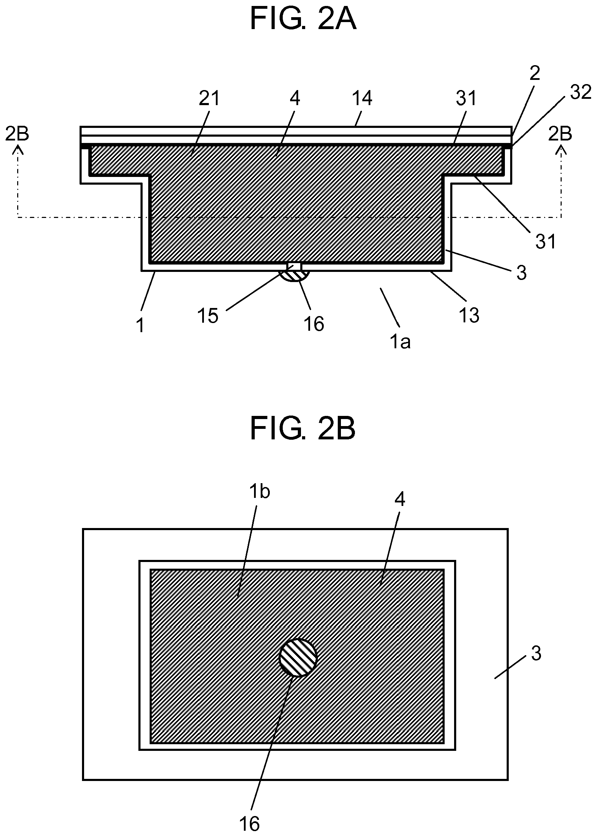

FIG. 1 is an enlarged perspective view showing a part of refrigerator door 1a which is an example of vacuum heat insulator 13 according to an exemplary embodiment of the present invention. FIG. 2A is a sectional view of vacuum heat insulator 13 according to the exemplary embodiment of the present invention taken along line A-A of FIG. 1. FIG. 2B is a sectional view of vacuum heat insulator 13 according to the exemplary embodiment of the present invention taken along line 2B-2B of FIG. 2A.

Vacuum heat insulator 13 according to the exemplary embodiment is used in refrigerator door 1a, for example. As shown in FIGS. 1 and 2A, vacuum heat insulator 13 according to the exemplary embodiment includes outer box 2 of which an inner surface has gas barrier layer 31 and inner box 3 of which an inner surface also has gas barrier layer 31.

An outer surface of outer box 2 may include appearance part 14 having a glass plate and a metal plate. Heat insulating space 1b between outer box 2 and inner box 3 is filled with open-cell urethane foam 4 (a heat insulating core material of the vacuum heat insulator). Peripheries of outer box 2 and inner box 3 are bonded and sealed by thermal welding layer 32.

As shown in FIG. 2A, inner box 3 includes exhaust port 15. Exhaust port 15 is sealed after evacuation is performed through exhaust pipe 16 by a vacuum pump. Open-cell urethane foam 4 includes minute pores (cells) 21 having diameters ranging from 2 µm to 30 µm (both inclusive). Exhaust port 15 is sealed in a finished product of refrigerator door 1a equipped with vacuum heat insulator 13. Note that a plurality of vent holes 22 provided in open-cell urethane foam 4 are not shown in FIGS. 2A and 2B, but will be described in detail below.

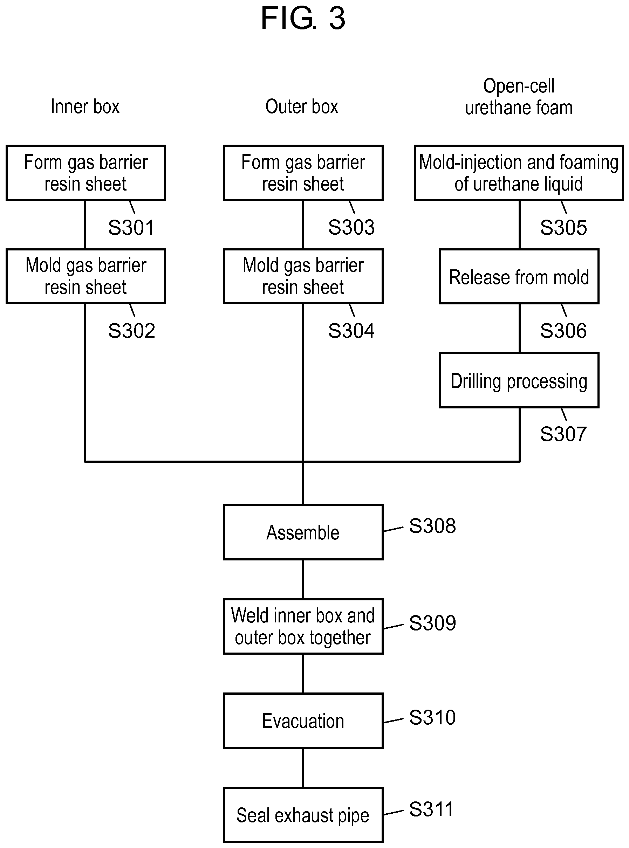

Next, a method of manufacturing refrigerator door 1a, which is an example of vacuum heat insulator 13 according to the exemplary embodiment is described with reference to FIG. 3.

Inner box 3 is formed of a material having a high gas-barrier property, and permeation of mainly air and water vapor through inner box 3 needs to be suppressed. An ethylene-vinyl alcohol copolymer, a liquid crystal polymer, or the like is used as a material of low air permeability, and polypropylene, polyethylene, or the like is used as a material of low water vapor permeability. Metal foil can completely suppress permeation of air and water vapor. Inner box 3 is formed by laminating one or more layers of the gas barrier materials.

For example, a multilayer resin, in which an ethylene-vinyl alcohol copolymer is inserted between polypropylene materials, is treated by a primary processing to form a sheet shape or a film shape (S301) and then is treated by a vacuum forming process or a pressure forming process as a secondary processing.

Since an inner box requires strength when vacuum heat insulator 13 is used in refrigerator door 1a or the like, a secondary processed article is inserted along an inner surface of a polypropylene injection-molded container to form inner box 3 (S302). Inner box 3 includes exhaust port 15 and exhaust pipe 16 for connecting exhaust port 15 to the vacuum pump. Although exhaust pipe 16 is formed of polypropylene like the injection-molded container, exhaust pipe 16 may be a metal exhaust pipe or a glass exhaust pipe. Since it becomes harder to seal exhaust port 15 and exhaust pipe 16 as inside diameters of exhaust port 15 and exhaust pipe 16 become larger, the inside diameters of exhaust port 15 and exhaust pipe 16 are set to be 1 mm or more and 10 mm or less according to the exemplary embodiment. Open-cell urethane foam 4 has extremely high exhaust resistance and the exhaust resistance of open-cell urethane foam 4 is a rate-determining factor of evacuation time of whole vacuum heat insulator 13, and thus the exhaust efficiency is not reduced even when the diameters of the exhaust port and the exhaust pipe are made small, specifically ranging from 1 mm to 10 mm (both inclusive).

Outer box 2 is formed of a material having a high gas-barrier property, like inner box 3. In a case of refrigerator door 1a, outer box 2 has a planar shape and thus a resin laminated film or a sheet including a metal layer or the like is used.

For example, a laminated film or a sheet including a polyethylene terephthalate layer which is a protective material as an outer layer, an aluminum foil layer which is a gas-barrier material as an intermediate layer, and a polypropylene layer which is a bonding layer bonded to inner box 3 as an inner layer (S303) is used. A molding process includes only cutting of the laminated film or sheet into a size of outer box 2 (S304).

According to the exemplary embodiment, urethane liquid is injected and foamed into a metal mold having a shape identical to the heat insulating space between outer box 2 and inner box 3 (S305), and then released from the mold (S306) to form open-cell urethane foam 4. A plurality of vent holes 22 are formed in thus molded open-cell urethane foam 4 (heat insulating material) (S307). A method of manufacturing vent holes 22 will be detailed in the following passages.

A molded article of open-cell urethane foam 4 including vent holes 22 is housed in inner box 3 and covered by outer box 2 (S308), and heat and pressure is applied to outer peripheries of inner box 3 and outer box 2 so that inner box 3 and the polypropylene layer of outer box 2 are thermally welded to each other (S309). Next, exhaust pipe 16 is connected to a vacuum pump and evacuation is performed for a predetermined time period (S310), and then exhaust pipe 16 is sealed (S311). Exhaust pipe 16 is formed of polypropylene which is the same material as inner box 3, and is sealed by applying heat or both heat and pressure.

Note that various gas absorbents may be provided inside vacuum heat insulator 13 together with open-cell urethane foam 4. The gas absorbent provided inside vacuum heat insulator 13 enables a degree of vacuum to be maintained for a long period of time by absorbing remaining gases which have not been exhausted during the evacuation and also absorbing minute gases entering over a long period of time through the inner box and the outer box having a high gas-barrier property.

Next, a configuration of open-cell urethane foam 4 is described.

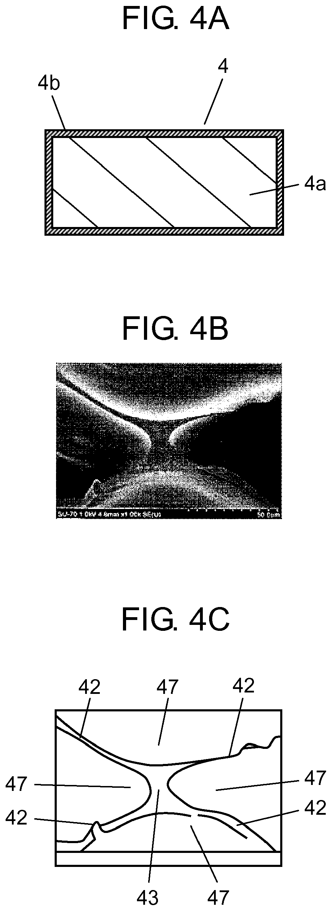

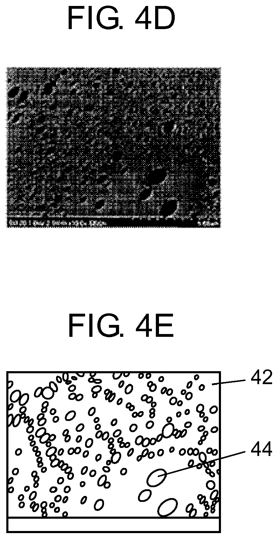

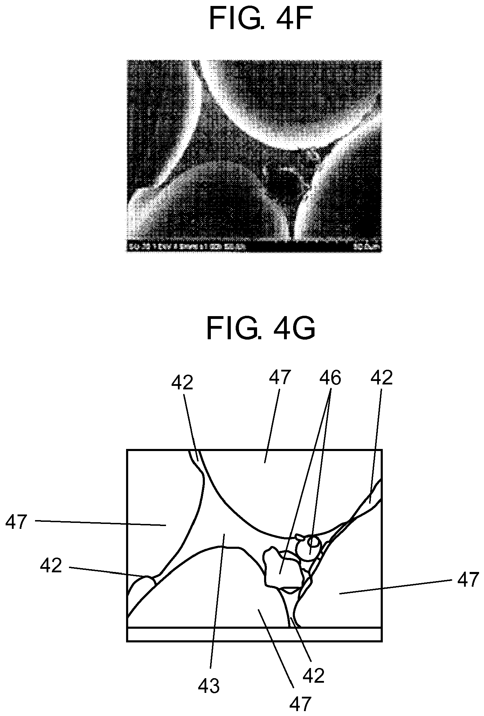

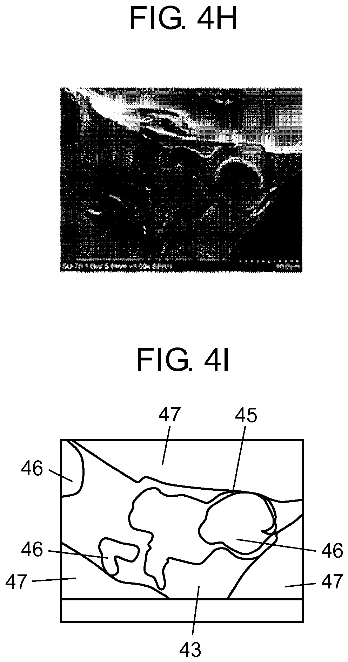

FIG. 4A is a schematic diagram illustrating a configuration example of open-cell urethane foam 4 according to the exemplary embodiment of the present invention. FIG. 4B is a microphotograph showing a condition between one or more pairs of opposing cells of open-cell urethane foam 4 according to the exemplary embodiment of the present invention as shown in FIG. 4A. FIG. 4C illustrates a configuration of the cells shown in FIG. 4B of open-cell urethane foam 4 according to the exemplary embodiment of the present invention. FIG. 4D is a microphotograph of a cell film portion of open-cell urethane foam 4 shown in FIG. 4A according to the exemplary embodiment of the present invention. FIG. 4E illustrates a configuration of the cell film portion shown in FIG. 4D of the open-cell urethane foam according to the exemplary embodiment of the present invention. FIG. 4F is a microphotograph of through holes (second through holes) formed by a fine powder at a cell skeleton portion between one or more pairs of opposing cells of the open-cell urethane foam according to the exemplary embodiment of the present invention shown in FIG. 4A. FIG. 4G illustrates a configuration of the cell skeleton portion shown in FIG. 4F of the open-cell urethane foam according to the exemplary embodiment of the present invention. FIG. 4H is a microphotograph showing a further detail of a condition of the cell skeleton portion of open-cell urethane foam 4 according to the exemplary embodiment of the present invention shown in FIG. 4F. FIG. 4I illustrates a configuration of the cell skeleton portion shown in FIG. 4H of the open-cell urethane foam according to the exemplary embodiment of the present invention.

Referring to FIG. 4A, open-cell urethane foam 4 includes core layer 4a and skin layer 4b surrounding a periphery of core layer 4a. Skin layer 4b is a layer of a (insufficiently foamed) core material (urethane foam) formed of a thick resin generated near a boundary surface between urethane foam and a wall of a mold or the like at the time of foaming. As shown in FIGS. 4B and 4C, open-cell urethane foam 4 is formed of a member with high porosity (95%, for example). Open-cell urethane foam 4 includes a plurality of cells 47, and cell film portions 42 formed in a film shape between one or more pairs of opposing cells 47. Open-cell urethane foam 4 also includes cell skeleton portion 43 connected to one of cell film portions 42 formed between a pair of opposing cells 47 and another one of cell film portions 42 formed between another pair of opposing cells 47. A thickness of cell skeleton portion 43 (a distance between a pair of opposing cells 47 and another pair of opposing cells 47, the same shall apply hereinafter) is larger than a thickness of each of cell film portions 42 (a distance between a pair of opposing cells 47, the same shall apply hereinafter). Specifically, the thickness of each of cell film portions 42 is about 3 µm, and the thickness of cell skeleton portion 43 is about 150 µm, for example.

Note that a proportion of cell skeleton portion 43 in open-cell urethane foam 4 is larger in skin layer 4b, in which urethane is insufficiently foamed, than in core layer 4a.

Although an area where urethane is insufficiently foamed in open-cell urethane foam 4 may include a condition in which cells 47 are dispersed in a bulk resin, the above definition of a relationship between each cell film portions 42 and cell skeleton portion 43 can apply even in such a condition. In other words, it is assumed that most part is cell skeleton portion 43 in the condition in which cells 47 are dispersed in the bulk resin. Within the above-described range of the thickness of each portion, a portion in which a distance between a pair of opposing cells 47 is 3 µm or less is typical cell film portion 42, and a portion in which a distance between a pair of opposing cells 47 is 150 µm or more is typical cell skeleton portion 43.

To ensure continuous air-permeability of all cells 47 in open-cell urethane foam 4, each of cell film portions 42 includes first through holes 44 as shown in FIGS. 4D and 4E, and cell skeleton portion 43 includes second through holes 45 as shown in FIGS. 4H and 4I.

First through holes 44 in each of cell film portions 42 are formed based on distortion generated at a molecular level by foaming more than two kinds of urethane powders having no affinity for each other and having different molecular weight, for example. The more than two kinds of urethane powders may include, for example, polyol mixture of predetermined composition and polyisocyanate, and first through holes 44 are formed by causing a reaction between the urethane powders in the presence of a blowing agent such as water. First through holes 44 can also be formed by using calcium stearate or the like. An average diameter of first through holes 44 is in a range from 2 µm to 8 µm (both inclusive), and first through holes 44 form pores 21 of open-cell urethane foam 4 (see FIG. 2A, for example).

Whereas, fine powders (such as polyethylene powders or nylon powders) which have no affinity for (hardly stick to) the urethane powders are mixed and filled into the urethane powders, so that second through holes 45 in cell skeleton portion 43 can be formed on boundary surfaces between particles 46 of the fine powders and cells 47 as shown in FIGS. 4H and 4I. While a particle diameter of each of cells 47 is about 100 µm, a particle diameter of each of particles 46 of the fine powders is set to be in an approximate range from 10 µm to 30 µm (both inclusive), so that a communication ratio due to second through holes 45 can be optimized. Accordingly, an average diameter of second through holes 45 is in a range from 10 µm to 30 µm (both inclusive), and second through holes 45 form pores 21 of open-cell urethane foam 4.

In open-cell urethane foam 4 thus configured, urethane liquid to be injected includes a mixture of more than two kinds of urethane powders having no affinity for each other, so as to provide first through holes 44 in cell film portions 42 of the foamed cells (see FIGS. 4D and 4E). To provide second through holes 45 in cell skeleton portion 43 which forms foamed cells 47 (see FIGS. 4H and 4I), a mixture of particles 46 having no affinity for urethane powders is used.

Note that the details of open-cell urethane foam 4 described above are disclosed in PTL 2.

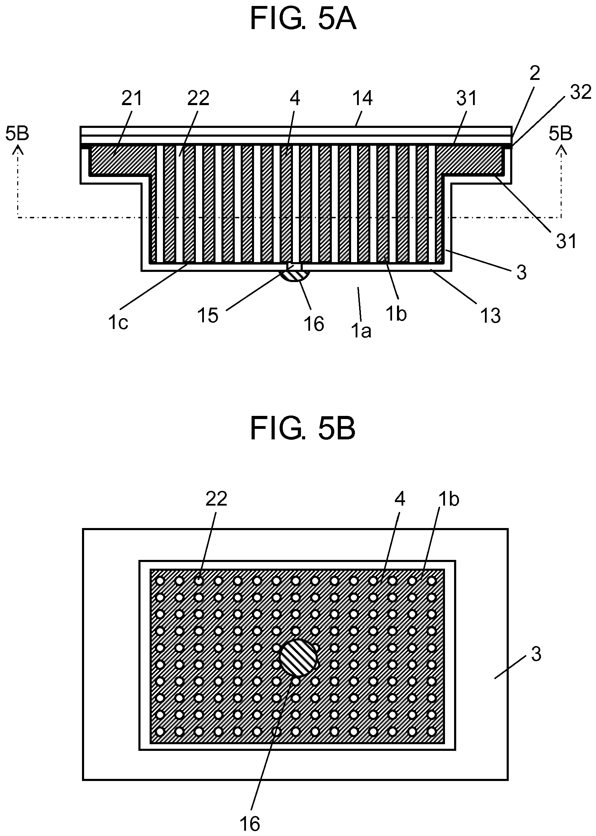

Then, a method of forming a plurality of vent holes 22 in open-cell urethane foam 4 (drilling processing (S307)) and a configuration of vent holes 22 are described with reference to FIGS. 5A to 10B.

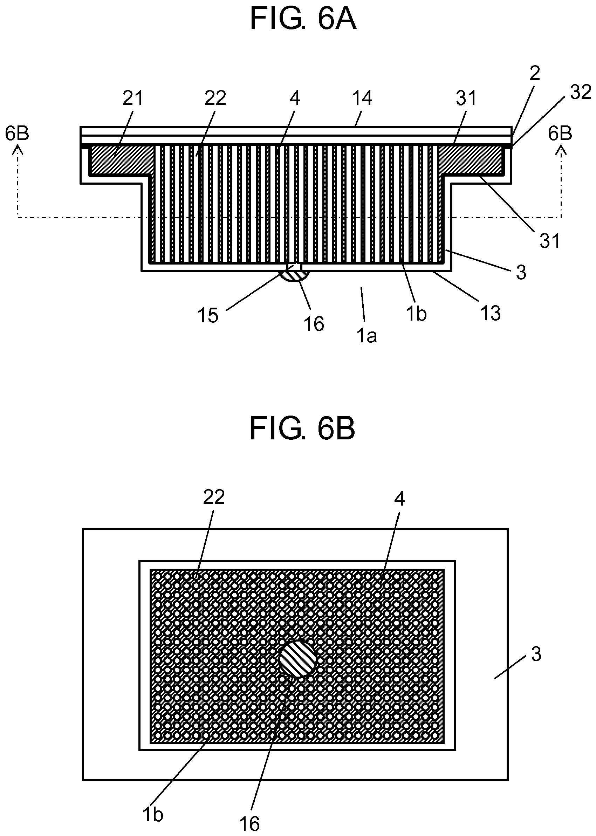

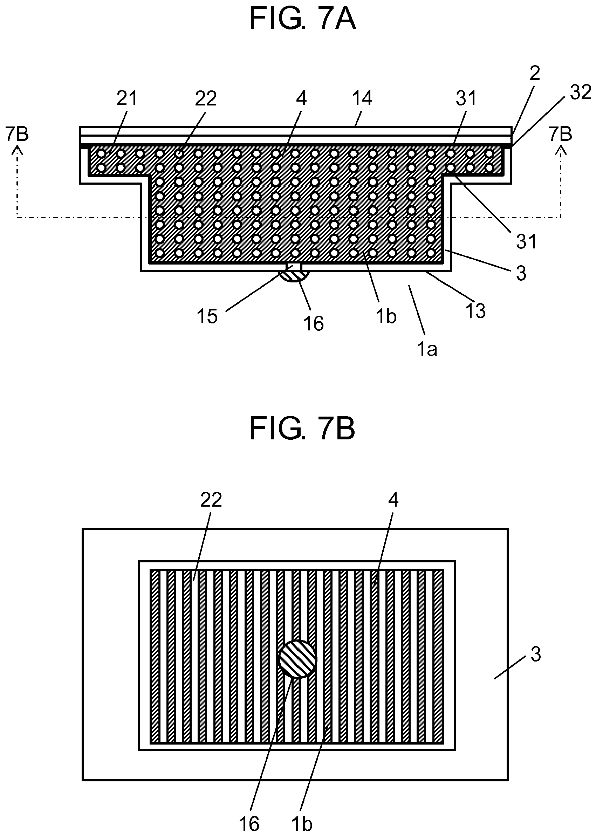

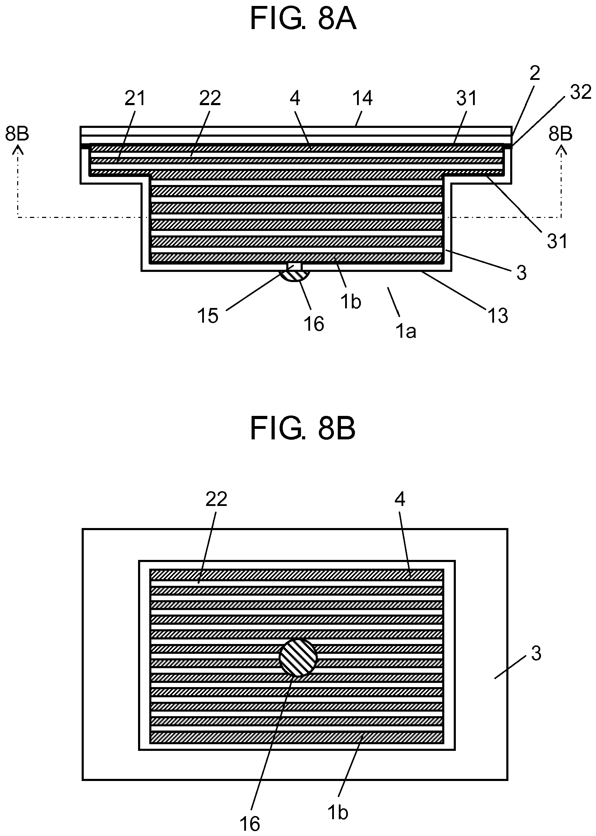

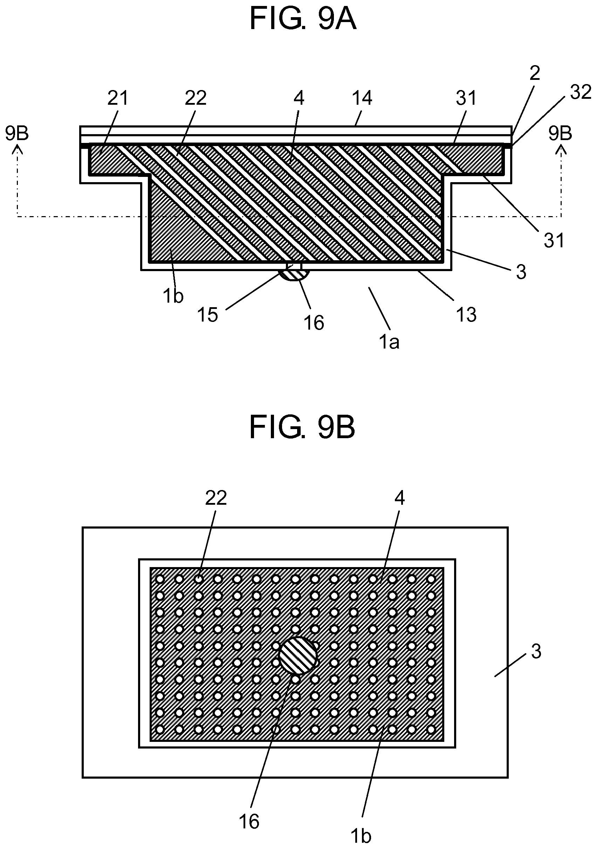

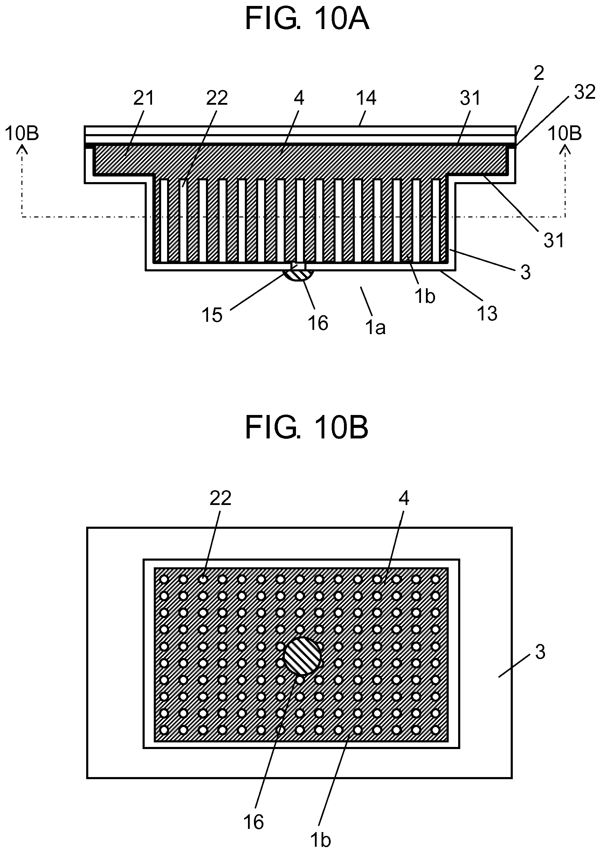

FIG. 5A is a sectional view of the vacuum heat insulator according to the exemplary embodiment of the present invention taken along line A-A of FIG. 1, showing a condition in which vent holes 22 are provided. FIG. 5B is a sectional view of the vacuum heat insulator according to the exemplary embodiment of the present invention taken along line 5B-5B of FIG. 5A. FIG. 6A is a sectional view of the vacuum heat insulator of another arrangement example 1 according to the exemplary embodiment of the present invention taken along line A-A of FIG. 1. FIG. 6B is a sectional view of the vacuum heat insulator of the arrangement example 1 according to the exemplary embodiment of the present invention taken along line 6B-6B of FIG. 6A. FIG. 7A is a sectional view of the vacuum heat insulator of another arrangement example 2 according to the exemplary embodiment of the present invention taken along line A-A of FIG. 1. FIG. 7B is a sectional view of the vacuum heat insulator of the arrangement example 2 according to the exemplary embodiment of the present invention taken along line 7B-7B of FIG. 7A. FIG. 8A is a sectional view of the vacuum heat insulator of another arrangement example 3 according to the exemplary embodiment of the present invention taken along line A-A of FIG. 1. FIG. 8B is a sectional view of the vacuum heat insulator of the arrangement example 3 according to the exemplary embodiment of the present invention taken along line 8B-8B of FIG. 8A. FIG. 9A is a sectional view of the vacuum heat insulator of another arrangement example 4 according to the exemplary embodiment of the present invention taken along line A-A of FIG. 1. FIG. 9B is a sectional view of the vacuum heat insulator of the arrangement example 4 according to the exemplary embodiment of the present invention taken along line 9B-9B of FIG. 9A. FIG. 10A is a sectional view of the vacuum heat insulator of another arrangement example 5 according to the exemplary embodiment of the present invention taken along line A-A of FIG. 1. FIG. 10B is a sectional view of the vacuum heat insulator of the arrangement example 5 according to the exemplary embodiment of the present invention taken along line 10B-10B of FIG. 10A.

In vacuum heat insulator 13 according to the exemplary embodiment, a plurality of vent holes 22 are provided (S307) in open-cell urethane foam 4 (heat insulating material) obtained by the above injection and foaming step (S305) and releasing step (S306). Vent holes 22 are dispersedly arranged on at least one surface of the heat insulating material in a uniform direction. For example, according to the exemplary embodiment, vent holes 22 are dispersedly arranged on back surface 1c, which is a surface of the heat insulating material of vacuum heat insulator 13 shown in FIG. 1, in a uniform direction, that is, in a thickness direction of vacuum heat insulator 13 (the thickness direction between outer box 2 and inner box 3 respectively positioned on the front side and the back side of vacuum heat insulator 13), as shown in FIGS. 5A and 5B. Each of vent holes 22 communicates with exhaust port 15.

Vent holes 22 may be arranged as shown in another arrangement example 1 in FIGS. 6A and 6B in which vent holes 22 are dispersedly arranged in the same direction as vent holes 22 shown in FIGS. 5A and 5B, but a number of vent holes 22 is larger than that of vent holes 22 shown in FIGS. 5A and 5B, or may be arranged as shown in another arrangement example 2 in FIGS. 7A and 7B in which vent holes 22 are dispersedly arranged in parallel to a height direction of vacuum heat insulator 13 (vertical direction of vacuum heat insulator 13 shown in FIG. 1). Vent holes 22 may be arranged as shown in another arrangement example 3 in FIGS. 8A and 8B in which vent holes 22 are dispersedly arranged in parallel to a horizontal direction of vacuum heat insulator 13, that is, in a direction along the longitudinal side of a bottom surface of inner box 3 of vacuum heat insulator 13 (left-and-right direction of vacuum heat insulator 13 shown in FIG. 1), or may be arranged as shown in another arrangement example 4 in FIGS. 9A and 9B in which vent holes 22 are dispersedly arranged in an inclined manner and parallel to one another, that is, vent holes 22 are dispersedly arranged parallel to one another diagonally from an inner surface of outer box 2 toward an inner surface of inner box 3 of vacuum heat insulator 13 shown in FIG. 1. Vent holes 22 may be configured as shown in another arrangement example 5 in FIGS. 10A and 10B in which vent holes 22 are arranged in the same direction as in vacuum heat insulator 13 shown in FIGS. 5A and 5B, but depths of vent holes 22 (depths in the thickness direction of vacuum heat insulator 13) falls within a range of 50% or more and less than 100% of a thickness of open-cell urethane foam 4 that fills vacuum heat insulator 13.

Next, a method of providing vent holes 22 is described.

Providing vent holes 22 by using and inserting pins with flat tips into open-cell urethane foam causes generation of shavings and increases a variation in diameters of vent holes 22. Thus, pins with sharp cone-shaped tips are used to provide vent holes 22, for example, by placing open-cell urethane foam 4 on a stage of a numerical control machine (NC machine), setting a jig with pins arranged in a longitudinal line (e.g., 43 pins at intervals of 4.5 mm) on an upper robot, and performing a Z-axis movement by the NC machine so that the pins are inserted in a longitudinal line into open-cell urethane foam 4. In addition, vent holes 22 with 4.5-mm pitches are provided on a whole surface of open-cell urethane foam 4 by operating the NC machine to perform lateral (x-axis) movements at intervals of 4.5 mm. In this manner, vent holes 22 are dispersedly arranged in parallel to one another.

After open-cell urethane foam 4 is set in inner box 3, evacuation of vacuum heat insulator 13 is effectively performed through exhaust port 15 due to a small gap between open-cell urethane foam 4 and inner box 3, vent holes 22 provided as described above, and an open-cell path provided at the time of forming urethane foam. As the diameters of vent holes 22 increase, the evacuation time becomes shorter and thermal conductivity is reduced, but excessively large diameters of vent holes 22 causes reduction in an improving effect of thermal conductivity. Accordingly, the diameters of vent holes 22 are desirably in a range from 0.1 mm to 6.0 mm (both inclusive) which is sufficiently larger than the diameters of pores 21 of open-cell urethane foam 4 ranging from 2 µm to 30 µm (both inclusive) so that enhancement of heat insulating performance can be expected and the evacuation time can be reduced.

The direction in which vent holes 22 are provided may be the thickness direction of vacuum heat insulator 13 as shown in FIGS. 5A and 5B or FIGS. 6A and 6B, or may be the height direction of vacuum heat insulator 13 (vertical direction of vacuum heat insulator 13 shown in FIG. 1) as shown in FIGS. 7A and 7B. The direction may be the direction along the longitudinal side of the bottom surface of inner box 3 as shown in FIGS. 8A and 8B, or may be a diagonal direction or the like from outer box 2 side toward inner box 3 side of the heat insulating material of vacuum heat insulator 13 as shown in FIGS. 9A and 9B. In vacuum heat insulator 13 according to the exemplary embodiment, the exhaust efficiency is highest and the evacuation time is reduced in a case where a heat insulating material having vent holes 22 that are provided in a direction along the longitudinal side of the bottom surface of inner box 3, that is, a direction in which vent holes 22 becomes longest as shown in FIGS. 8A and 8B is used.

In addition, the evacuation time becomes shorter as a proportion of an opening area of vent holes 22 (a proportion of the opening area of vent holes 22 in an area of a surface of heat insulating material on which vent holes 22 are provided) is increased in a case where intervals of vent holes 22 on the heat insulating material are less than 4.5 mm. In such a condition, however, a strength of open-cell urethane foam 4 reduces and vent holes 22 of open-cell urethane foam 4 deforms due to compression caused by an atmospheric pressure, and accordingly, the proportion of the opening area of vent holes 22 is desirably in a range from 0.1% to 8.0% (both inclusive). The evacuation time becomes shortest when depths of vent holes 22 in the thickness direction of open-cell urethane foam 4 are greatest, that is, when vent holes 22 are ideally through holes. However, the depths of vent holes 22 are desirably at least 50% or more of an average thickness of open-cell urethane foam 4 as shown in FIGS. 10A and 10B so as to improve an equilibrium pressure by 40% or more under a constant evacuation time.

In view of the above features of vent holes 22, according to the exemplary embodiment, vent holes 22 are provided in vacuum heat insulator 13 shown in FIGS. 5A and 5B under the conditions of: diameters of 0.5 mm; intervals of 4.5 mm; the thickness direction of vacuum heat insulator 13; a proportion of the opening area of 1.0%; and the forms of through holes each having a depth of 15 mm.

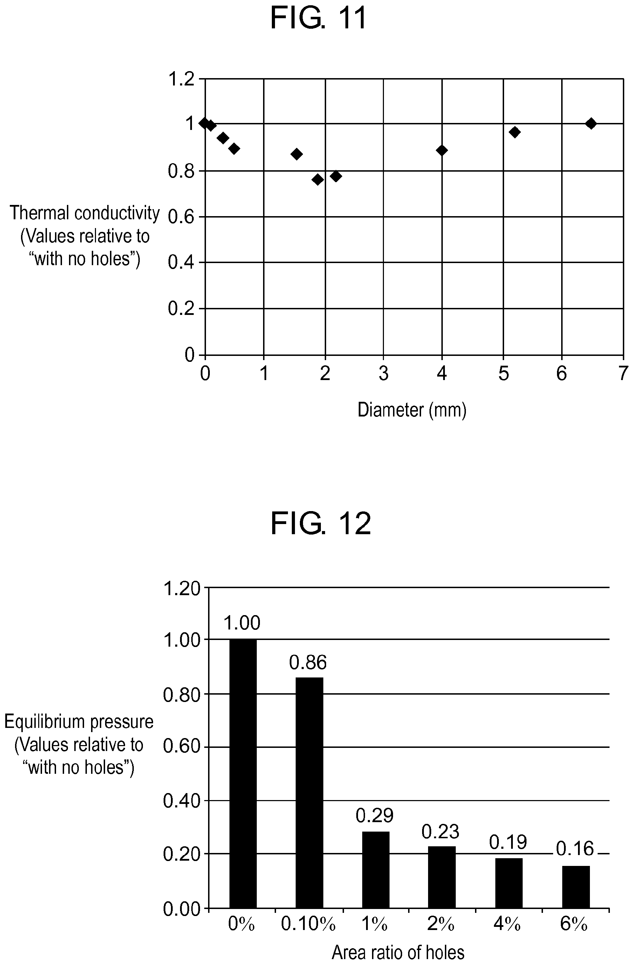

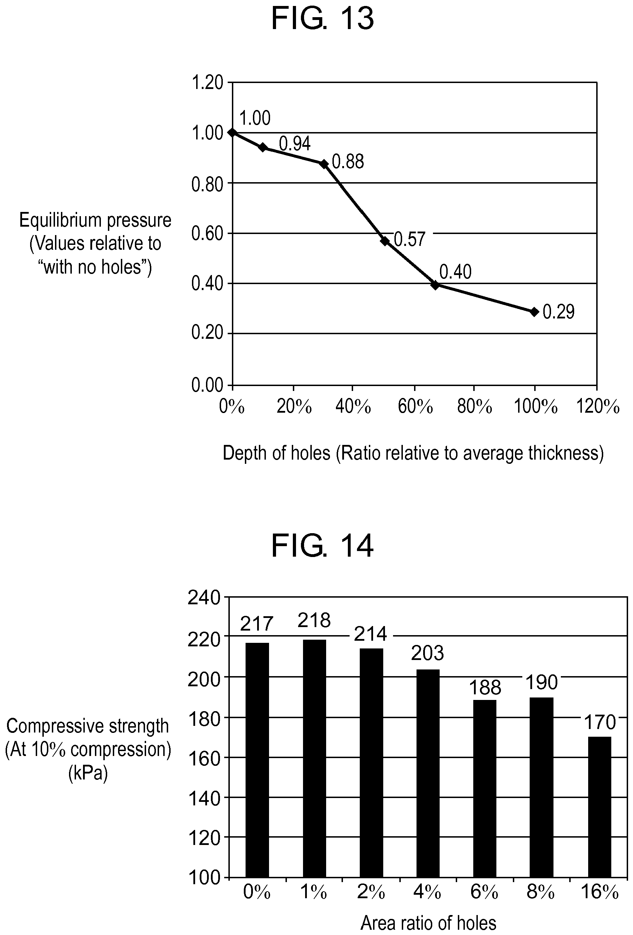

FIG. 11 shows measurement results of thermal conductivity, FIGS. 12 and 13 show measurement results of equilibrium pressures, and FIG. 14 shows measurement results of compressive strengths, of vacuum heat insulator 13 with the above configuration according to the exemplary embodiment.

First, the thermal conductivity of vacuum heat insulator 13 shown in FIG. 11 decreases until the diameters of vent holes 22 are increased to 2.0 mm, but increases when the diameters of vent holes 22 are further increased, and becomes almost the same as that of vacuum heat insulator 13 having no vent holes when the diameters of vent holes 22 exceed 6.0 mm.

Then, the equilibrium pressure of vacuum heat insulator 13 decreases as vent holes 22 are formed and the opening area (opening area of holes) of vent holes 22 on a surface of the heat insulating material increases and also the equilibrium pressure of vacuum heat insulator 13 decreases as the depths of vent holes 22 increases, as shown in FIGS. 12 and 13. In other words, time required to reach a predetermined pressure becomes shorter and also the evacuation time becomes shorter, as the opening area of vent holes 22 increases and the depths of vent holes 22 increases.

Finally, the compressive strength of vacuum heat insulator 13 begins to decrease as the opening area of vent holes 22 becomes 4% or more, and the compressive strength at 10% compression falls below 180 kPa when the opening area of vent holes 22 exceeds 8%, as shown in FIG. 14. A vacuum heat insulator having a compressive strength at 10% compression below 180 kPa may not withstand the compressive stress of atmospheric pressure.

As described above, vacuum heat insulator 13 according to the exemplary embodiment is filled with the heat insulating material including open-cell urethane foam 4 and is equipped with exhaust port 15 for evacuation. In vacuum heat insulator 13 with such a configuration, a plurality of vent holes 22 each having a diameter ranging from 0.1 mm to 6 mm (both inclusive) are provided on at least one surface of the heat insulating material in a uniform direction. This configuration shortens the exhaust passages from open cells of open-cell urethane foam 4 having a high ventilation resistance to exhaust port 15, so that ventilation resistance at the time of evacuation of vacuum heat insulator 13 is reduced. This reduces the evacuation time, thereby improving productivity and reducing production costs.

Since the exhaust passages from pores (cells) 21 in open-cell urethane foam 4 of heat insulating material having a high ventilation resistance to exhaust port 15 are shortened, gases gradually generated from inside of open-cell urethane foam 4 can be reduced and also can be dispersed into the whole exhaust passages formed of open cells (pores 21) included in the heat insulating material, vent holes 22 provided in the heat insulating material, and the like. This configuration also suppresses deformation of vacuum heat insulator 13 due to a local pressure increase. In addition, this configuration also suppresses degradation in heat insulation performance due to a reduction in the amount of gases generated from the heat insulating material of open-cell urethane foam 4 having a high ventilation resistance.

A plurality of vent holes 22 provided in the heat insulating material are dispersedly arranged on at least one surface of the heat insulating material in a uniform direction, and communicate with exhaust port 15. This configuration reduces the ventilation resistance of whole vacuum heat insulator 13.

Vent holes 22 may be provided such that the proportion of the opening area of vent holes 22 in the area of the surface of the heat insulating material of vacuum heat insulator 13 on which vent holes 22 are provided falls within a range from 0.1% to 4.0% (both inclusive). This configuration enables evacuation of vacuum heat insulator 13 to be finished in a predetermined time, and also enables open-cell urethane foam 4 of the heat insulating material to maintain the compressive strength to withstand the pressure from the atmospheric pressure after evacuation and sealing of vacuum heat insulator 13. This prevents deformation of a container of vacuum heat insulator 13, and thus, after installation in a product such as a refrigerator or the like, prevents reduction in the heat insulation performance as a product caused by a gap between vacuum heat insulator 13 and an outer wall of a product such as a refrigerator.

The depths of vent holes 22 in the heat insulating material of vacuum heat insulator 13 may be at least 50% or more of an average thickness of the heat insulating material from a surface on which vent holes 22 are opened to a surface opposing to the surface with vent holes 22 of the heat insulating material. Although it is desirable that all of the vent holes are through holes to reduce the ventilation resistance to a lowermost level, the depths of the holes with better efficiency may be determined according to a shape of a jig for forming vent holes 22 such as an injection needle, a facility condition for opening vent holes 22, and the exhaust efficiency.

At the time of providing vent holes 22 in the heat insulating material of vacuum heat insulator 13, the diameter, the direction, the area ratio, and the depths of the holes may be determined and vent holes 22 may be provided such that the compressive strength at 10% compression of the heat insulating material after providing vent holes 22 is 180 kPa or more. This configuration enables evacuation of vacuum heat insulator 13 to be finished in a predetermined time, and also enables open-cell urethane foam 4 of the heat insulating material to maintain the compressive strength to withstand the pressure from the atmospheric pressure after evacuation and sealing of vacuum heat insulator 13. This prevents deformation of vacuum heat insulator 13, and thus, after installation in a product such as a refrigerator or the like, prevents reduction in the heat insulation performance as a product caused by a gap between the vacuum heat insulator and an outer wall of the product.

Open-cell urethane foam 4 includes a plurality of cells 47 including one or more pairs of opposing cells 47, and cell film portions 42 formed in a film shape between the one or more pairs of opposing cells 47. Open-cell urethane foam 4 further includes cell skeleton portion 43 that is connected to one of cell film portions 42 formed between a pair of opposing cells among the one or more pairs of opposing cells 47 and another one of cell film portions 42 formed between another pair of opposing cells among the one or more pairs of opposing cells 47 and has a thickness larger than the thicknesses of cell film portions 42 (see FIG. 4C). Open-cell urethane foam 4 further includes first through holes 44 penetrating each of cell film portions 42 (see FIG. 4E), and second through holes 45 penetrating cell skeleton portion 43 (see FIG. 4I). A plurality of cells 47 are communicated with one another through first through holes 44 and second through holes 45. Open-cell urethane foam 4 includes pores 21 each having a diameter ranging from 2 µm to 30 µm (both inclusive), and pores 21 are communicated with vent holes 22 each having a diameter ranging from 0.1 mm to 6 mm (both inclusive) which is sufficiently larger than the diameter of pore 21.

This configuration enables efficient evacuation from the whole heat insulating material of vacuum heat insulator 13, which results in a significant reduction in the evacuation time in an evacuation step to evacuate the heat insulating material. This can significantly increase the production throughput. In addition, this achieves downsizing of production facilities for performing evacuation and reduction in operating time and man-hours, which makes it possible to provide inexpensive products.

As described above, a vacuum heat insulator according to an example of the exemplary embodiment of the present invention is filled with a heat insulating material including open-cell urethane foam and is equipped with an exhaust port for evacuation. In the heat insulating material, a plurality of vent holes each having a diameter ranging from 0.1 mm to 6.0 mm (both inclusive) are provided on at least one surface of the heat insulator in a uniform direction.

With this configuration, air in the vacuum heat insulator is exhausted from the heat insulating material of a high ventilation resistance through the vent holes provided in the heat insulating material at the time of evacuating the interior of the vacuum heat insulator. This shortens the exhaust passages from the cells (pores) included in the heat insulating material to the exhaust port to enable efficient evacuation, which reduces evacuation time and improves productivity. Since the exhaust passages are shortened due to the vent holes provided in the heat insulating material, gases gradually generated from the interior of the heat insulating material such as the open-cell urethane foam can be reduced, and in addition such gases can be dispersed to the whole passages formed by the vent holes provided in the heat insulating material or the like. This configuration also suppresses deformation of the vacuum heat insulator due to a local pressure increase in the vacuum heat insulator. In addition, this configuration also suppresses degradation in the heat insulation performance, since the amount of gases generated from the heat insulating material of a high ventilation resistance is reduced.

In the vacuum heat insulator according to an example of the exemplary embodiment of the present invention, the vent holes in the heat insulating material may be dispersedly arranged in parallel to one another, and may communicate with the exhaust port.

This configuration lowers the ventilation resistance of the whole vacuum heat insulator, thereby improving evacuation efficiency and enhancing productivity.

In the vacuum heat insulator according to an example of the exemplary embodiment of the present invention, the vent holes may be provided in the heat insulating material such that the proportion of the opening area of the vent holes in the area of at least one surface of the heat insulating material on which the vent holes are opened falls within a range from 0.1% to 4.0% (both inclusive).

This configuration enables evacuation of the vacuum heat insulator to be finished in a predetermined time, and also enables the open-cell urethane foam of the heat insulating material to maintain the compressive strength to withstand the pressure from the atmospheric pressure after evacuation and sealing of the vacuum heat insulator. This prevents deformation of a container of the vacuum heat insulator, and thus, after installation of the vacuum heat insulator in a product such as a refrigerator or the like, prevents reduction in the heat insulation performance as a product caused by a gap between the vacuum heat insulator and an outer wall of a product such as a refrigerator.

In the vacuum heat insulator according to an example of the exemplary embodiment of the present invention, the depths of a plurality of the vent holes provided in the heat insulating material of the vacuum heat insulator may be at least 50% or more of an average thickness of the heat insulating material from a surface on which the vent holes are opened to a surface opposing to the surface.

With this configuration, the depths of the vent holes with better efficiency can be determined according to a shape of a jig for forming the vent holes in the heat insulating material such as an injection needle, a facility condition for opening the vent holes in the heat insulating material, and the exhaust efficiency.

In the vacuum heat insulator according to an example of the exemplary embodiment of the present invention, the vent holes may be provided in the heat insulating material such that the compressive strength at 10% compression of the heat insulating material after providing the vent holes is 180 kPa or more. Specifically, at the time of providing the vent holes in the heat insulating material, the diameter, the direction, the area ratio, and the depths of the holes may be determined and the vent holes may be provided such that the compressive strength at 10% compression of the vacuum heat insulator after providing the vent holes is 180 kPa or more.

This configuration enables evacuation of the vacuum heat insulator to be finished in a predetermined time, and also enables the open-cell urethane foam of the heat insulating material to maintain the compressive strength to withstand the pressure from the atmospheric pressure after evacuation and sealing of the vacuum heat insulator. This prevents deformation of the vacuum heat insulator, and thus, after installation of the vacuum heat insulator in a product such as a refrigerator or the like, prevents reduction in the heat insulation performance as a product due to a gap between the vacuum heat insulator and an outer wall of the product.

In the vacuum heat insulator according to an example of the exemplary embodiment of the present invention, the open-cell urethane foam may include a plurality of cells including one or more pairs of opposing cells, and cell film portions formed in a film shape between the one or more pairs of opposing cells. The open-cell urethane foam may further include a cell skeleton portion that is connected to one of the cell film portions formed between a pair of opposing cells among the one or more pairs of opposing cells and another one of the cell film portions formed between another pair of opposing cells among the one or more pairs of opposing cells and has a thickness larger than the thicknesses of the cell film portions. The open-cell urethane foam may further include first through holes penetrating each of the cell film portions, and second through holes penetrating the cell skeleton portion. A plurality of cells may be communicated with one another through the first through holes and the second through holes.

This configuration enables efficient evacuation from the whole heat insulating material. This results in a significant reduction in the evacuation time in an evacuation step to evacuate the vacuum heat insulator, thereby significantly increasing the production throughput. In addition, this achieves downsizing of production facilities for performing evacuation and reduction in operating time and man-hours, which makes it possible to provide inexpensive products.

A heat-insulating container or a heat-insulating wall according to an example of one exemplary embodiment of the present invention uses the above described vacuum heat insulator. Using the above described vacuum heat insulator leads to an improvement of the evacuation efficiency at the time of production, thereby increasing productivity.

### INDUSTRIAL APPLICABILITY

As described above, the present invention provides a vacuum heat insulator having high heat insulating performance with which evacuation efficiency and productivity are improved. Accordingly, the present invention can be widely applied to consumer devices, such as refrigerators, electric hot-water heaters and the like, heat insulating bodies for automobiles and houses, and heat-insulating containers and heat-insulating walls and the like using the heat insulating bodies.

### REFERENCE MARKS IN THE DRAWINGS

- 1: refrigerator
- 1a: refrigerator door
- 1b: heat insulating space
- 1c: surface
- 2: outer box
- 3: inner box
- 4: open-cell urethane foam
- 13: vacuum heat insulator
- 14: appearance part
- 15: exhaust port
- 16: exhaust pipe
- 21: pore
- 22: vent hole
- 31: gas barrier layer
- 32: thermal welding layer

## Claims

1. A vacuum heat insulator comprising:
a heat insulating material formed of open-cell urethane foam, and an exhaust port for evacuation,
wherein the heat insulating material includes a plurality of vent holes on at least one surface of the heat insulating material in a uniform direction, and each of the vent holes has a diameter ranging from 0.1 mm to 6.0 mm, both inclusive.

2. The vacuum heat insulator according to claim 1, wherein the vent holes of the heat insulating material are dispersedly arranged in parallel to one another, and communicates with the exhaust port.

3. The vacuum heat insulator according to claim 1 or 2, wherein a proportion of opening areas of the vent holes of the heat insulating material in an area of the at least one surface of the heat insulating material on which the vent holes are provided is within a range from 0.1% to 8.0%, both inclusive.

4. The vacuum heat insulator according to any one of claims 1 to 3, wherein each of the vent holes of the heat insulating material has a depth of at least 50% or more of an average thickness between the at least one surface on which the vent holes are provided and a surface opposing to the at least one surface of the heat insulating material.

5. The vacuum heat insulator according to any one of claims 1 to 4, wherein the vent holes are provided on the heat insulating material such that a compressive strength at 10% compression under atmospheric pressure is 180 kPa or more.

6. The vacuum heat insulator according to any one of claims 1 to 5, wherein the open-cell urethane foam includes:
a plurality of cells including one or more pairs of opposing cells;
cell film portions formed in a film shape between the one or more pairs of opposing cells;
a cell skeleton portion connected to the cell film portions and having a thickness larger than thicknesses of the cell film portions;
first through holes penetrating each of the cell film portions; and
second through holes penetrating the cell skeleton portion,
wherein the cells are communicated with one another through the first through holes and the second through holes.

7. A heat-insulating container comprising the vacuum heat insulators according to any one of claims 1 to 6.

8. A heat-insulating wall comprising the vacuum heat insulators according to any one of claims 1 to 6.
